**Europäisches Patentamt**

(19) **European Patent Office**

**Office européen des brevets**

(11) Numéro de publication: **0 228 974 B1**

(12) # FASCICULE DE BREVET EUROPEEN

(45) Date de publication du fascicule du brevet:
26.07.89

(51) Int. Cl.⁴: **B22D 31/00**, B23D 45/02,
B23D 47/04

(21) Numéro de dépôt: **86420287.4**

(22) Date de dépôt: **25.11.86**

(54) **Machine de tronçonnage de masselottes de pièces de fonderie.**

(30) Priorité: **03.12.85 FR 8518369**

(43) Date de publication de la demande:
**15.07.87 Bulletin 87/29**

(45) Mention de la délivrance du brevet:
**26.07.89 Bulletin 89/30**

(84) Etats contractants désignés:
**DE ES GB IT**

(56) Documents cités:
**EP-A- 0 038 740**
**FR-A- 2 050 454**
**FR-A- 2 371 993**
**GB-A- 493 873**

(73) Titulaire: **société à Responsabilité Limitée de droit francais ETUDES REALISATIONS SERVICES E.R.S., 31, rue Jules Ferry, F-69520 Grigny Rhone(FR)**

(72) Inventeur: **Fanelli, Noel, 15, rue Bertholet, F-69780 Mions(FR)**
Inventeur: **Michalet, Serge, Rue André Sabatier, F-69520 Grigny(FR)**

(74) Mandataire: **Maureau, Philippe et al, Cabinet Germain & Maureau Le Britannia - Tour C 20, bld Eugène Déruelle Boîte Postale 3011, F-69392 Lyon Cédex 03(FR)**

ACTORUM AG

## Description

La présente invention se rapporte à une machine polyvalente destinée au tronçonnage automatique ou semi-automatique des masselottes de pièces de fonderie, plus particulièrement de métaux non-ferreux, ces pièces pouvant être de formes très variées.

En fonderie, et surtout en fonderie de métaux non-ferreux à fort cœfficient de dilatation, tels que des alliages d'aluminium ou des métaux cuivreux, il est nécessaire de prévoir le moule de façon à ce que la pièce coulée soit équipée de masselottes judicieusement réparties, dont le rôle essentiel est de pallier au retrait important du métal lors du refroidissement de celui-ci. Ces masselottes de fonderie sont ensuite éliminées par sciage, l'équipement courant pour réaliser cette opération restant encore à ce jour la scie à ruban. La pièce de fonderie est tenue et dirigée à la main, par un opérateur hautement spécialisé, contre la scie à ruban, de manière à en éliminer toutes les masselottes. La pièce est ensuite arasée à la main pour enlever toutes traces des masselottes d'origine.

Ce procédé de tronçonnage des masselottes à la scie à ruban est assez satisfaisant dans le cas où l'on ne désire réaliser qu'une ou quelques pièces. Il se prête par contre mal à la fabrication en grande série, du fait qu'il est relativement long, qu'il nécessite un opérateur qualifié, qu'il est fastidieux en opérations répétitives, et parce qu'il présente, en raison de la fatigue à attendre de l'opérateur, un danger d'accidents pour celui-ci, ainsi qu'un risque d'apparition de nombreux rebuts.

Pour pallier à ce genre d'inconvénients, il est connu d'employer des machines comportant un moyen de tronçonnage, tel qu'une scie circulaire. Celui-ci peut être mobile au moment de la découpe des masselottes, la pièce se trouvant alors maintenue en position par des moyens d'immobilisation, comme décrit dans le brevet français No 7 024 571, dans la demande de brevet européen publiée sous le No 0 038 740, ou dans le brevet britannique No 493 873.

Le moyen de tronçonnage peut, dans un second type de machine, être fixe au moment de la découpe des masselottes, la machine comportant un moyen de déplacement de la pièce, comme il est décrit dans le brevet français No 7 636 395. Sie ces deux types de machines donnent parfaitement satisfaction dans le cas de façonnage en série de pièces de fonderie toujours identiques, par exemple des pistons de moteur dans le cas de la demande de brevet européen No 0 038 740, par contre, on ne peut pas les utiliser pour travailler des pièces de formes variées, ce qui les rend inutiles le jour où l'on serait amené à traiter d'autres pièces, par exemple le piston différent d'un nouveau type de moteur. Toutefois, certaines de ces machines, telles celles décrites par le brevet français No 7 024 571 ou le brevet britannique No 493 873, comportent des moyens permettant de changer le positionnement de la pièce par rapport au plan de coupe, mais ce changement de position est nécessaire pour chaque pièce différente, et doit s'opérer manuellement, ce qui compromet toute production en grande série.

On pourrait penser à utiliaer un bras-robot programmable pour guider la pièce le long d'une scie à ruban ou d'une scie circulaire. Malheureusement une telle solution n'est pas envisageable car il est nécessaire que l'organe de préhension de la pièce puisse résister à des efforts de sciage importants, ce qui n'est absolument pas le cas pour de tels bras-robots programmables. D'autre part, un tel bras-robot programmable serait, dans la plupart des cas, d'un prix de revient prohibitif.

L'invention se rapporte donc à une machine de tronçonnage de masselottes de pièces de fonderie qui ne présente pas tous ces inconvénients, étant rapide, sûre, à fonctionnement au moins partiellement automatique, de réalisation relativement peu onéreuse, et susceptible de traiter des pièces de formes et de dimensions très variées, ce qui la rend pratiquement universelle.

Cette machine comprend une unité de sciage équipée d'une scie circulaire d'arbre horizontal, et réglable en position, tout en restant, en ce qui concerne son axe de rotation, dans le même plan vertical, ainsi qu'une table horizontale de support de la pièce à tronçonner, cette table étant réglable en position, tout en restant dans le même plan horizontal, cette table étant en outre apte à recevoir au moins une unité de bridage de la pièce à tronçonner, caractérisée en ce que le réglage de l'unité de sciage se fait:

– manuellement de haut en bas et vice versa, dans le sens vertical,

– automatiquement, par exemple par vérin, de gauche à droite et vice versa, dans le sens horizontal, en ce que, par ailleurs, le réglage de la table horizontale de support de la pièce à tronçonner se fait:

– manuellement de gauche à droite et vice versa, dans le direction parallèle à l'arbre de la scie circulaire,

– automatiquement par exemple par vérin, d'arrière en avant et vice versa, dans la direction de sciage, perpendiculaire à l'arbre de la scie circulaire, et en ce que l'unité de bridage de la pièce à tronçonner est ajustable en position sur la table, et est équipée de moyens commandés à distance permettant d'imprimer à la pièce bridée un mouvement de rotation autour d'un axe parallèle à l'arbre de la scie circulaire.

Avantageusement, l'ensemble de la partie de travail est entourée d'un capot de protection, ledit capot étant équipé d'un volet d'ouverture et de fermeture permettant le chargement et le déchargement de la pièce à traiter. Avantageusement par ailleurs, la machine de l'invention est équipée d'un dispositif d'évacuation des copeaux et masselottes par tapis roulant, débouchant préférentiellement sur un dispositif de triage en sortie de la machine.

L'invention permet ainsi de confier la pièce à démasselotter à une machine, qui effectue alors rapidement et automatiquement l'opération de tronçonnage sans risque pour l'opérateur.

La conception particulière de la machine de l'invention permet de réaliser plusieurs types de sciage, définis sur des programmes sélectionnés :

-masselottes rectilignes et longues, nécessitant un déplacement important de la pièce,
-masselottes circulaires nécessitant une rotation de la pièce,
-masselottes situées dans des plans différents.

A chaque type de sciage correspond une adaptation particulière de tenue de la pièce ainsi que, si nécessaire, une série de mouvements combinés de la pièce et de la tête de sciage.

L'utilisation possible d'une scie circulaire à dents en carbure de tungstène, permet une vitesse de coupe très supérieure à celle d'une scie à ruban ; les masselottes peuvent être de section importantes et être fixées sur des pièces de formes géométriques très variées. Des alliages durs, tels que des alliages hyper-silicés AS12 ou AS13, peuvent également être tronçonnés, moyennant une réduction de la vitesse de coupe.

Enfin, la régularité du travail accompli par la machine de l'invention son respect des cotes, sa vitesse de coupe élevée, le fait qu'elle permet d'éviter les rebuts, et sa conception particulière qui permet d'utiliserpour des pièces de géométrie et de dimensions très différentes, en font une machine industrielle et pratiquement universelle.

L'invention sera d'ailleurs bien comprise à l'aide de la description suivante d'un exemple préférentiel de réalisation, en référence aux dessins schématiques annexés dans lesquels :

Figure 1 est une vue d'ensemble en perspective de la machine de l'invention,

Figure 2 est un diagramme de mouvements automatiquement effectués par la machine de la figure 1 pour traiter la pièce ronde qui y est bridée à titre d'exemple,

Figure 3 est une vue partielle en coupe longitudinale de la partie à démasselotter selon l'exemple de la figure 1,

Figure 4 est une vue en perspective du dispositif de bridage équipant la machine de la figure 1, mais maintenant une pièce d'une autre forme,

Figure 5 est un diagramme de mouvements automatiquement effectués par la machine pour traiter la pièce selon la figure 4.

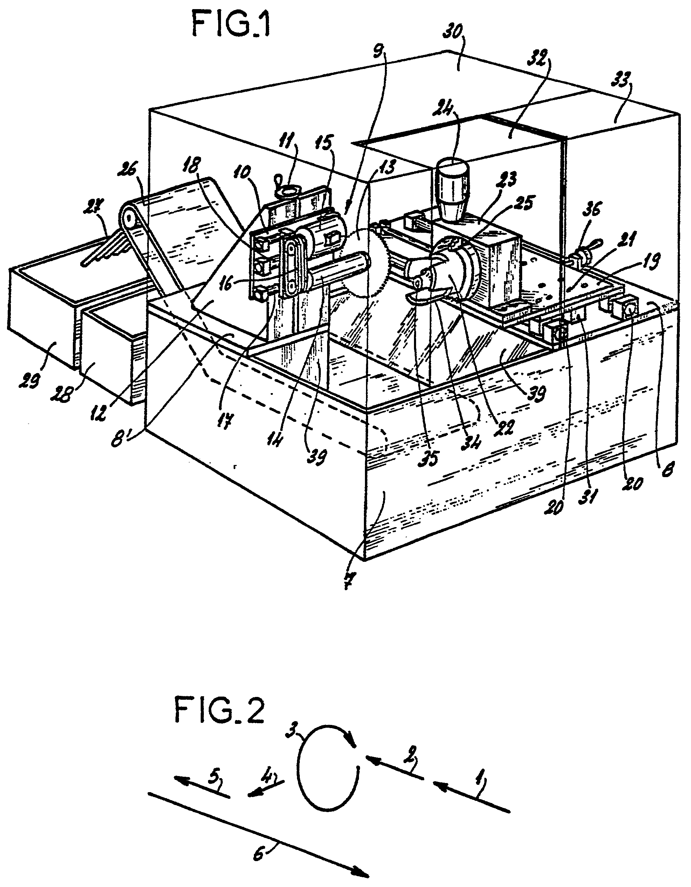

En se reportant tout d'abord à la figure 1, la machine de tronçonnage de masselottes de fonderie conforme à l'invention comporte :
-un bâti mécano-soudé 7 en forme de boîte parallélépipèdique ouverte vers le haut,
-une plaque horizontale de support 8, en forme de U à une jambe demi-tronçonnée 8', fixée sur le bâti 7,
-un unité de sciage 9 portée par une plaque verticale 10 elle-même fixée, de manière réglable manuellement en hauteur à l'aide d'un dispositif classique à vis sans fin et manivelle 11, sur un des côtés verticaux d'une équerre de soutien 12 fixée sur la petite jambe 8' de la table 8 ; l'unité de sciage 9 est équipée d'une scie circulaire 13, dont la lame est pourvue de dents en carbure de tungstène, dont l'arbre 14 est horizontal et est entraîné en rotation à vitesse élevée (de l'ordre de 1500 à 2500 tours/minute par exemple, dépendant du métal à tronçonner) par l'intermédiaire d'un moteur électrique 15 et d'une transmission classique 16 à poulies et courroies permettant un choix de vitesses en rotation ; l'ensemble de sciage 9 est monté sur la plaque verticale 10 de manière coulissante dans le sens horizontal, grâce à deux glissières 17 et sous commande à distance d'un vérin hydraulique horizontal 18, lui-même fixé sur la plaque verticale 10,
-une table horizontale 19, portée par la grande jambe de la table 8, de manière réglable en position, tout en restant dans son seul et même plan horizontal :
*manuellement de gauche à droite et vice-versa, dans la direction parallèle à l'arbre 14 de la scie circulaire, grâce à un dispositif classique à vis sans fin et manivelle 36,
*automatiquement, par commande à distance d'un vérin hydraulique 31 orthogonal à l'arbre 14 et fixé sur la table 8, d'arrière en avant et vice-versa, dans la direction orthogonale à l'arbre 14, le long de glissières 20 ;
la table 19 est percée de nombreux trous taraudés 21 destinés à la fixation, ajustable en position, sur cette table d'un ou plusieurs dispositifs de bridage de la pièce 22 à démasselotter, au moins un de ces dispositifs de bridage étant, tel que le dispositif 23 représenté au dessin, équipé de moyens (groupe moto-variateur 24, plateau tournant de fixation 25) permettant d'imprimer à la pièce bridée 22 un mouvement de rotation, de vitesse réglable, autour d'un axe parallèle à l'arbre 14,
-à la partie inférieure du bâti 7, sous la scie circulaire 13, un tapis sans fin 26 de récupération et d'évacuation, vers la gauche de la figure, des copeaux et masselottes tronçonnées, qui sont alors, comme représenté, remontées à hauteur d'une grille de triage 27 permettant de recueillir dans un premier bac 28 les copeaux, assez petits pour passer à travers la grille 27, et dans un deuxième bac 29 les masselottes, trop volumineuses pour traverser la grille 27,
-un capot de protection amovible 30, enveloppant la partie active 9,19,25, muni à l'avant et sur le dessus d'une échancrure 32 permettant d'approvisionner et d'évacuer, par palan si nécessaire, la pièce 22 à démasselotter ; l'échancrure 32 est découverte et refermée par un volet coulissant 33, représenté au dessin en position ouverte,
-un groupe hydraulique, non représenté, assurant l'animation automatique de l'ensemble, sous coordination d'une armoire électrique, non représentée, équipée d'un dispositif de programmation de cycles adaptés aux pièces à démasselotter.

Le fonctionnement de la machine qui vient d'être décrite sera maintenant explicité à l'aide des figures suivantes.

En se référant tout d'abord à l'exemple illustré sur les figures 1 à 3, la pièce de fonderie 22 à traiter est équipée de trois masselottes périphériques 34, et d'une masselotte centrale 35 de petit diamètre. Comme représenté, la pièce 22, qui est circulaire, est bridée sur le plateau vertical tournant 25 par trois mors. L'axe de rotation est donc celui de la pièce cylindrique 22, et est parallèle à celui de l'arbre 14 de la scie circulaire.

Dans ces conditions, le cycle de fonctionnement de la machine, schématisé sur la figure 2, et le suivant :

La pièce 22 étant supposée faire partie d'une série de pièces identiques, on a tout d'abord, préalablement à cette série, réglé manuellement d'une part la position en hauteur de l'unité de sciage 9, et d'autre part sa position selon la direction de l'arbre 14 de la table 19. Pour effectuer ces opérations, on bascule vers l'arrière l'ensemble du capot 30, et l'on agit sur les deux manivelles 11 et 36. Le cycle établi se décompose alors comme suit :

Le volet 23 étant refermé, manuellement ou automatiquement, on agit sur le vérin 18 pour amener la lame de scie 13 dans le plan 37 de coupe des trois masselottes périphériques 34, puis on agit, comme indiqué par la flèche 1, sur le vérin 31 pour faire avancer la pièce 32 en direction de la lame de scie, cette première avance étant rapide, par exemple à vitesse linéaire de 1500 cm/mn.

Une fois la pièce 22 parvenue au niveau de la périphérie de la lame circulaire 13, on ralentit fortement sa vitesse d'avancée, sur un trajet 2, pour l'amener à sa vitesse linéaire de sciage, par exemple 200 cm/mn. Il est bien entendu que la lame 13 elle-même est entraînée en rotation à sa vitesse de sciage, par exemple 2000 tours/mn, toutes ces données dépendant de la nature du métal à tronçonner. Le trajet 2 est limité à une distance qui n'est pas sensiblement très supérieure à l'épaisseur e des masselottes 34.

Le sciage complet des trois masselottes 34 est alors effectué en imprimant à la pièce 22, une rotation 3 d'un tour, à vitesse relativement lente, dépendant du métal et de l'épaisseur e, par exemple 2 tours/mn pour fixer les idées.

Les masselottes 34, avec les copeaux de coupe, tombent sur le tapis sans-fin d'évacuation 26, guidés dans leur chute par des goulottes fortement inclinées 39.

En agissant alors sur le vérin 18, comme indiqué par la flèche 4, on recule l'ensemble de sciage 9 pour amener la lame de scie 13 dans le plan de coupe 38 de la quatrième masselotte centrale 35 de faible diamètre.

On avance alors, comme indiqué par la flèche 5, la pièce 22 vers la lame 13, de manière à effectuer un sciage "en plongée" de la masselotte 35, ceci n'étant bien entendu réalisable que si l'on peut suffisamment faire pénétrer ainsi la lame de scie 13 totalement dans la masselotte 35 sans que cette dernière ne vienne toucher le flasque de maintien de la lame 13. Si tel n'est pas le cas, on procèdera substantiellement comme précédemment, c'est à dire en sciant tout d'abord "en plongée", puis en arrêtant la translation de la pièce 22 et en la faisant tourner d'un tour entier comme précédemment.

L'opération de sciage 5 de la dernière masselotte 35 étant effectuée, celle-ci est évacuée par le tapis 26, et l'on agit d'une part sur le vérin 31 pour provoquer un retour rapide de la pièce 22 à sa position de départ, comme indiqué par la flèche 6, et d'autre part sur le vérin 18 pour ramener l'unité de sciage 9 à sa position de départ. On peut alors ouvrir, manuellement ou automatiquement, le volet 33 et procéder au débridage et à l'évacuation de la pièce 22.

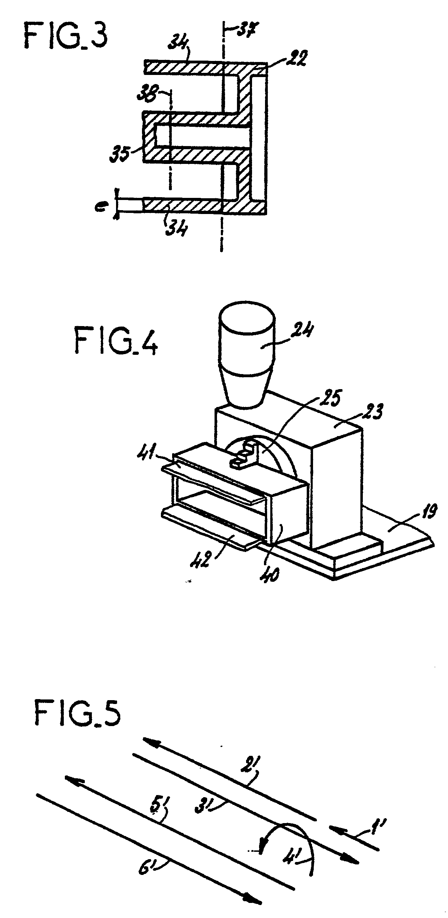

Les figures 4 et 5 représentent un autre mode de fonctionnement de la machine de l'invention, équipée de son dispositif de bridage 23 à plateau rotatif 25 et moto-variateur 24, appliqué au tronçonnage de deux masselottes allongées 41 et 42, d'une boîte parallélépipèdique 40.

Les manivelles 36 et 11 ayant été réglées en conséquence, en particulier pour que la masselotte supérieure 41 puisse être totalement coupée par la partie inférieure de la lame 13, le cycle de fonctionnement, schématisé sur la figure 5, est cette fois le suivant :

-première phase 1' : avance rapide de la pièce 40 en direction de la lame de scie 13,

-seconde phase 2' : avance lente, à la vitesse de sciage, de la pièce 40, de façon à réaliser le tronçonnage de la masselotte supérieure 41 par sciage longitudinal,

-troisième phase 3' : retour rapide de la pièce 40 à sa position de départ,

-quatrième phase 4' : rotation d'un demi-tour de la pièce 40, de façon à amener la masselotte 42 à la place qu'occupait précédemment la masselotte 41, -cinquième phase 5' : sciage, comme précédemment, de la masselotte 42 par déplacement longitudinal de la pièce 40, la partie active étant toujours la partie inférieure de la lame circulaire 13, -sixième phase 6' : retour rapide de la pièce 40 à sa position de départ.

Ces deux exemples peuvent être considérés comme étant représentatifs de modes de fonctionnement les plus sophistiqués de la machine de l'invention, et montrent que la machine est utilisable pour le tronçonnage de masselottes sur des pièces très diverses. Il va de soi que, pour des cas très simples, par exemple pour une ou plusieurs masselottes tronçonnables par un seul sciage longitudinal, on pourra remplacer le dispositif de bridage 23 à plateau rotatif 25 par une simple bride, du genre "sauterelle" par exemple.

**Revendications**

1. Machine de tronçonnage de masselottes de pièces de fonderie, comprenant une unité de sciage (9) équipée d'une scie circulaire (13) d'arbre (14) horizontal, et réglable en position, tout en restant, en ce qui concerne son axe de rotation, dans le même plan vertical, ainsi qu'une table (19) horizontale de support de la pièce (22, 40) à tronçonner, cette table (19) étant réglable en position, tout en restant dans le même plan horizontal, cette table (19) étant en outre apte à recevoir au moins une unité de bridage (23) de la pièce (22, 40) à tronçonner, caractérisée en ce que le réglage de l'unité de sciage (9) se fait:

— manuellement de haut en bas et vice versa, dans le sens vertical,

— automatiquement, par exemple par vérin (18), de gauche à droite et vice versa, dans le sens horizontal, en ce que, par ailleurs, le réglage de la table (19) horizontale de support de la pièce (22, 40) à tronçonner se fait:

— manuellement de gauche à droite et vice versa, dans la direction parallèle à l'arbre (14) de la scie circulaire (13),

— automatiquement par exemple par vérin (31), d'arrière en avant et vice versa, dans la direction de sciage, perpendiculaire à l'arbre (14) de la scie circulaire (13), et en ce que l'unité de bridage (23) de la pièce (22, 40) à tronçonner est ajustable en position sur la table (19), et est équipée de moyens (24, 25) commandés à distance permettant d'imprimer à la pièce (22, 40) bridée un mouvement de rotation autour d'un axe parallèle à l'arbre (14) de la scie circulaire.

2. Machine selon la revendication 1, caractérisé en ce qu'elle est équipée d'un capot de protection (30) muni d'un dispositif d'ouverture (33).

3. Machine selon la revendication 1 ou la revendication 2, caractérisée en ce qu'elle est équipée d'un dispositif (26) d'évacuation des copeaux et masselottes.

4. Machine selon la revendication 3, caractérisée en ce que ledit dispositif d'évacuation (26) débouche sur un dispositif de triage (27 à 29).

## Patentansprüche

1. Machine zum Abtrennen von Steigteilen von Gußteilen, aufweisend eine Sägeeinheit (9), ausgestattet mit einer Kreissäge (13) mit horizontaler und in der Position einstellbarer Welle (14), wobei sie, was ihre Drehachse anbelangt, ganz in derselben vertikalen Ebene bleibt, sowie einen horizontalen Tisch (19) zur Stütze des abzutrennenden Teils (22, 40), wobei dieser Tisch (19) in der Position einstellbar ist, wobei er ganz in derselben horizontalen Ebene bleibt, wobei dieser Tisch (19) außerdem in der Lage ist, wenigstens eine Flanscheinheit (23) des abzutrennenden Teils (22, 40) aufzunehmen, dadurch gekennzeichnet, daß die Einstellung der Sägeeinheit (9) erfolgt:

– manuell von oben nach unten und umgekehrt in der vertikalen Richtung,

– automatisch, beispielsweise mittels Stellglied (18), von links nach rechts und umgekehrt, in der horizontalen Richtung, daß außerdem die Einstellung des horizontalen Tisches (19) zur Stütze des abzutrennenden Teils (22, 40) erfolgt:

– manuell von links nach rechts und umgekehrt, in der Richtung parallel zur Welle (14) der Kreissäge (13),

– automatisch beispielsweise mittels Stellglied (31) von hinten nach vorne und umgekehrt, in der Sägerichtung, senkrecht zur Welle (14) der Kreissäge (13), und daß die Flanscheinheit (23) des abzutrennenden Teils (22, 40) in der Position auf dem Tisch (19) verstellbar ist und mit fernbedienten Mitteln (24, 25) ausgestattet ist, was es gestattet, auf das mit Flansch versehene Teil (22, 40) eine Drehbewegung um eine Achse parallel zur Welle (14) der Kreissäge auszuüben.

2. Maschine nach Anspruch 1, dadurch gekennzeichnet, daß sie mit einer Öffnungsvorrichtung (33) versehenen Schutzhaube (30) ausgestattet ist.

3. Maschine nach Anspruch 1 oder Anspruch 2, dadurch gekennzeichnet, daß sie mit einer Vorrichtung (26) zur Abführung von Spänne und Steigteilen ausgestattet ist.

4. Maschine nach Anspruch 3, dadurch gekennzeichnet, daß die Abführvorrichtung (26) in eine Sortiervorrichtung (27 bis 29) mündet.

## Claims

1. Device for cutting off feeder heads from castings, comprising a sawing unit (9) provided with a circular saw (13) having a horizontal axle (14) the position of which can be adjusted whilst its longitudinal axis remains in the same vertical plane and also a horizontal table for supporting the part (22, 40) to be cut, this table (19) moreover being capable of receiving at least one connecting unit of the part (22, 40) to be cut, characterised in that the sawing unit is adjustable:

– manually from top to bottom and vice versa in the vertical direction.

– automatically for example by a screw jack (18), from right to left and vice versa, in a horizontal direction in that, further, the horizontal table (19) for supporting the part (22, 40) to be cut is adjustable:

– manually from left to right and vice versa in the direction parallel to the axle (14) of the circular saw (13),

– automatically for example by screw jack (31) from back to front and vice vers in the sawing direction, perpendicular to the axle (14) of the circular saw (13), in that the connecting unit (23) of the part (22, 40) to be cut is adjustable in the position on the table (19) and is provided with means (24, 25) remotely controlled allowing the connecting part (22, 25) to impart to the part (22, 40) a rotational movement around an axis parallel to the axle (14) of the circular saw.

2. Machine according to Claim 1, characterised in that it is provided with a protective hood (30) provided with an opening device (33).

3. Machine according to Claim 1 or Claim 2, characterised in that it is provided with a device (26) mfor removing chips and feeder heads.

4. Machine according to Claim 3, characterised in that the said removal device (26) opens into a sorting device.

# FIG.1

# FIG.2

FIG.3

FIG.4

FIG.5